**Europäisches Patentamt**

**European Patent Office**

**Office européen des brevets**

(11) Numéro de publication: **0 033 256**
**B1**

## (12) FASCICULE DE BREVET EUROPEEN

(45) Date de publication du fascicule du brevet: **03.10.84**

(21) Numéro de dépôt: **81400030.3**

(22) Date de dépôt: **09.01.81**

(51) Int. Cl.³: **H 04 B 7/12**

(54) **Système de transmission radioélectrique en diversité, de structure simple et économique.**

(30) Priorité: **29.01.80 FR 8001898**

(43) Date de publication de la demande:
**05.08.81 Bulletin 81/31**

(45) Mention de la délivrance du brevet:
**03.10.84 Bulletin 84/40**

(84) Etats contractants désignés:
**DE GB IT NL SE**

(56) Documents cités:
**US-A-2 529 667**

**ELECTRONICS, vol. 27, no. 8, aoÛt 1954, NEW YORK (US) HOWARD: "Single-channel System of frequency diversity", pages 158-161**

(73) Titulaire: **THOMSON-CSF**
**173, Boulevard Haussmann**
**F-75379 Paris Cedex 08 (FR)**

(72) Inventeur: **Collin, Claude**
**THOMSON-CSF - SCPI 173, bld Haussmann**
**F-75360 Paris Cedex 08 (FR)**

(74) Mandataire: **Turlèque, Clotilde et al**
**THOMSON-CSF SCPI 173, Bld Haussmann**
**F-75379 Paris Cedex 08 (FR)**

Courier Press, Leamington Spa, England.

## Description

La présente invention concerne les systèmes de transmission radioélectrique en diversité, entre deux stations terminales, de signaux à haute fréquence modulés par l'information à transmettre lorsque les deux stations ne sont pas en visibilité, la liaison étant assurée, le plus souvent, par propagation en diffusion troposphérique ou ionosphérique.

De telles liaisons présentent une atténuation de propagation très variable en fonction du temps. Pour assurer en permanence la transmission des informations, il n'est pas économiquement rentable et même, dans bien des cas, il est pratiquement impossible de mettre en oeuvre des équipements ayant une marge de transmission suffisante pour assurer une qualité de communication minimale donnée lors d'une atténuation de propagation maximale rencontrée pendant un très faible pourcentage de temps. Il est alors constitué plusieurs voies de transmission en parallèle, dont les caractéristiques sont suffisament distinctes pour ne pas être affectées simultanément par une même atténuation de propagation, on obtient ainsi un fonctionnement en diversité où les signaux de chaque voie sont combinés, après des pondérations automatiquement ajustées, afin d'obtenir à chaque instant une qualité au moins égale à celle de la voie présentant la meilleure qualité.

Il est connu de mettre en oeuvre, isolément ou en combinaison, les modes de diversité angulaire, d'espace, de fréquence, etc..., et plus récemment la diversité temporelle, appliquée généralement aux transmissions numériques, qui assure une redondance dans la transmission de l'information, à des instants suffisamment éloignés pour bénéficier de conditions de propagation différentes.

Bien entendu, il en résulte un accroissement important des équipements utilisés et donc du coût des installations.

La diversité en fréquence à laquelle se rapporte plus particulièrement l'invention, est un des modes les plus communément utilisés.

Pour mettre en oeuvre un ordre N de diversité de fréquence, en propagation troposphérique ou ionosphérique il doit être prévu, par liaison, selon l'art connu, outre N récepteurs, N émetteurs de puissance assez élevée P de l'ordre de 1 KW par exemple, et de fréquences porteuses distinctes. Ces N émetteurs peuvent comporter un seul amplificateur de puissance commun, mais sa puissance crête doit alors être égale à $N^2P$ avec une linéarité suffisante pour éviter des niveaux excessifs de produits d'intermodulation.

Dans un article de D. D. Howard—Single Channel System of Frequency Diversity—publié dans Electronics, août 1954 un système de transmission en vue directe, en diversité de fréquence est décrit pour des signaux d'information modulant les porteuses en amplitude. Les raies sont créées en modulant en fréquence une porteuse pure. Mais dans ce système toutes les raies sont modulées en amplitude et transmises. Il n'y a pas de sélection de raies particulièrement choisies comme supports de voies de transmission en diversité et qui seraient donc amplifiées. D'ailleurs le problème de l'amplification ne se pose pas puisqu'il s'agit de transmission en vue directe.

La présente invention a pour but un système de transmission en diversité, pour des liaisons troposphériques ou ionosphériques nécessitant une amplification de puissance, ayant une structure de mise en oeuvre en diversité de fréquence d'ordre N beaucoup plus simple et économique, utilisée seule, ou associée avec les autres modes de diversité, y compris la diversité de fréquence en structure classique qui, en particulier, ne nécessite que les équipements utilisés normalement pour une seule voie, c'est-à-dire un seul émetteur basse puissance, un seul amplificateur de puissance, une seule antenne et, dans les circuits de réception un seul récepteur dont les circuits hyperfréquences et fréquence intermédiaire sont communs aux N signaux reçus en diversité.

Selon un premier mode de réalisation de l'invention, un système de transmission radioélectrique, entre deux stations terminales, de signaux à haute fréquence modulés par l'information numérique à transmettre dans lequel ces signaux sont transmis en diversité de fréquence d'ordre N, N étant un entier positif supérieur à 1, l'émetteur comportant, pour générer les N porteuses, un oscillateur de fréquence f modulé en fréquence par un signal de. fréquence F issu d'un générateur, est caractérisé en ce que la transmission entre les stations terminales s'effectue par diffusion troposphérique ou ionosphérique, en ce que la modulateur de fréquence de l'oscillation est effectuée selon un indice déterminé de manière à obtenir, parmi les raies du spectre créées par cette modulation, N raies ayant quasiment la même amplitude; et en ce qu'il comporte en outre un dispositif de modulation de phase numérique dont l'entrée de signal est couplée à la sortie de l'oscillateur et dont l'entrée de modulation reçoit des signaux d'information dont la fréquence la plus élevée est inférieure à F, et un amplificateur de puissance crête égale à 2P couplé à la sortie du dispositif de modulation amplifiant simultanément les N raies à une puissance moyenne P/N, suivi d'un filtre passe bande de largeur de bande légèrement supérieure à (N—1)F et d'une antenne d'émission.

Selon un second mode de réalisation de l'invention un système de transmission radioélectrique entre deux stations terminales, de signaux à haute fréquence modulés par l'information numérique à transmettre, dans lequel ces signaux sont transmis en diversité de fréquence d'ordre N, N étant un entier positif supérieur à 1 est caractérisé en ce que la transmission entre les stations terminales s'effectue par diffusion troposphérique ou ionosphérique et en ce que pour générer les N porteuses l'émetteur comprend: un oscillateur de fréquence f modulé en fréquence, par un signal composite obtenu par sommation dans un sommateur d'un signal de fréquence F issu d'un générateur et de signaux d'information dont la fréquence la plus élevée est inférieure à F, l'indice de modulation de l'oscillateur par le signal de sortie du générateur en l'absence de signaux d'information, étant déterminé de manière à obtenir, parmi les raies du spectre créé par cette modulation de fréquence, N raies ayant quasiment la même amplitude, le système comportant en outre un amplificateur de puissance crête égale à 2P couplé à la sortie de l'oscillateur, amplificant simultanément les N raies à une puissance moyenne P/N, suivi d'un filtre passe bande de largeur de bande légèrement supérieure à (N—1)F, et d'une antenne d'émission.

L'invention sera mieux comprise et d'autres caractéristiques apparaîtront à l'aide de la description ci-après et des dessins s'y rapportant sur lesquels:

— la figure 1 est un schéma de principe d'un émetteur du système de transmission selon l'invention;
— la figure 2 est une variante de la figure 1 applicable à la modulation en fréquence par les signaux d'information;
— la figure 3 est un exemple de schéma de principe d'un récepteur du système de transmission selon l'invention.

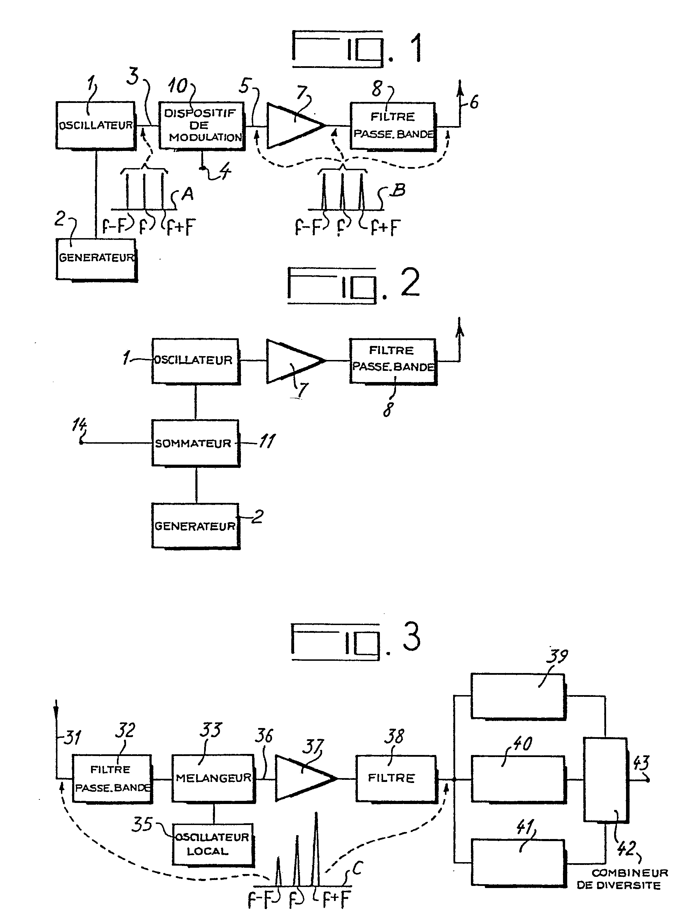

Sur la figure 1, un oscillateur 1 de fréquence f, est modulé, en fréquence, par un générateur 2 d'un signal sinusoïdal de fréquence F; sa sortie 3 est connectée à une entrée de porteuse d'un dispositif de modulation 10 dont l'entrée de modulation 4 reçoit les informations à transmettre et la sortie 5 est reliée à une antenne 6 à travers une chaine d'amplification 7 suivie d'un filtre passe bande 8.

L'indice de modulation en fréquence de l'oscillateur 1 est choisi égal à 1,435 dans cet exemple, il en résulte à sa sortie 3 un spectre de raies de Bessel A dont la raie centrale f et celles des premières bandes latérales symétriques (f±F) sont de même amplitude et concentrent, dans une bande égale à 2F, 90% de la puissance fournie par l'oscillateur 1.

Le dispositif de modulation comporte un modulateur de phase numérique classique, 10, l'information à transmettre lui étant appliquée sous forme de trains binaires dont la fréquence du rythme est nettement inférieure à F.

L'expérience montre que, en sortie du modulateur 10, chacune des raies du spectre de Bessel est modulée comme si elle était seule, pour constituer le spectre B, sans modifier la relation de phase privilégiée qui existe entre elles, de sorte que l'amplificateur 7 se comporte avec ce spectre de raies modulées comme avec un signal unique modulé en fréquence.

C'est ainsi que, dans cet exemple, l'amplificateur délivre une puissance moyenne P, somme des puissances de chacune de trois raies égales approximativement à P/3, avec une puissance de crête égale à 2P alors qu'elle serait égale à 6P si les raies résultaient de générateurs différents et étaient donc décorrelées en phase.

Le filtre passe bande 8 a pour but de limiter le rayonnement de l'antenne 6 aux seules trois raies utiles, il a donc une largeur de bande légèrement supérieure à 2F.

Tout ce qui vient d'être dit s'applique également à un dispositif de modulation comportant un modulateur en fréquence de tout type connu; dans ce dernier ces également, l'expérience montre que chaque raie du spectre de Bessel est modulée comme si elle était seule. Ce fait d'expérience est vérifié par le calcul à partir du développement mathématique de l'expression d'une onde modulée en fréquence par la somme de deux signaux sinusoïdaux que peut se mettre sous la forme de la somme des raies du spectre de Bessel relatif à un des signaux, chacune d'elles étant modulée en fréquence par l'autre signal.

La figure suivante montre un exemple d'emission en modulation de fréquence appliquant cette propriété.

Sur la figure 2, où les repères identiques à ceux de la figure 1 concernent les mêmes organes, le générateur 2 est couplé à l'oscillateur 1 à travers un sommateur 11 recevant sur une deuxième entrée 14 les informations à transmettre.

Un exemple de récepteur permettant de recevoir les signaux ainsi émis est montré par la figure suivante.

Sur la figure 3, une antenne 31 alimente à travers un filtre de bande 32, un mélangeur 33 couplé à un générateur d'oscillation locale 35 et dont la sortie 36 est reliée, à travers un amplificateur 37 suivi d'un filtre 38, aux entrées de trois dispositifs de filtrage et de démodulation 39 à 41 dont les sorties respectives sont connectées à un combineur de diversité 42 dont la sortie 43 restitue l'information transmise.

Les organes 32 à 38 sont ceux d'un récepteur classique où les signaux à fréquence intermédiaire sont amplifiés dans une bande déterminée par le filtre 38 et de largeur choisie, à titre d'exemple, un peu supérieure à 2F, bande du spectre transmis par les émetteurs précédemment décrits.

Les dispositifs 39 à 41 isolent et démodulent chacune des composantes du spectre C des trois porteuses reçues avec des amplitudes relatives variables, fonction des atténuations de propagation distinctes qui les affectent. Afin de faciliter le filtrage, il est prévu un filtre identique pour chaque dispositif precédé d'un convertisseur de fréquence, la largeur de bande de ce filtre étant un peu supérieure au spectre de chaque raie.

Le combineur 42 est du type classique; il additionne en permanence les trois signaux reçus avec une pondération relative de leurs niveaux en fonction de leur qualité.

L'émetteur et le récepteur décrits ci-dessus constituent un système de transmission en diversité de fréquence particulièrement simple et économique car il contient peu d'organes supplémentaires par rapport à une liaison classique monoporteuse.

L'ordre de diversité N, égal à 3 dans cet exemple décrit, peut être quelconque, et en particulier égal à 5 avec un indice de modulation par la fréquence F égal à 1,8 environ, car dans ce cas les cinq raies ont des amplitudes voisines.

Bien entendu, un tel système suppose, en pratique, qu'il soit utilisé pour lutter contre des perturbations de propagation décorrélées pour des écarts de fréquence porteuse relativement réduits, sinon le système devient difficilement réalisable et perd de son intérêt. Mais les études accomplies récemment dans ce domaine ont enrichi les connaissances des spécialistes qui peuvent maintenant calculer au plus juste l'écart de fréquence minimal nécessaire et tirer un profit maximal des dispositifs décrits.

Un exemple particulièrement intéressant d'application concerne les liaisons à propagation ionosphérique, en bande décamétrique notamment où de fréquents évanouissements sélectifs sont décorrélés, à des écarts de fréquence souvent inférieurs à la largeur de bande d'une voie téléphonique.

La simplicité de ce système permet de l'appliquer également aux radiocommunications à partir de véhicules mobiles.

En diffusion troposphérique où un ordre de diversité élevé est fréquemment utilisé, le système décrit permet, par sa simple substitution aux jeux d'émetteurs-récepteurs de tout système de transmission comportant un ou plusieurs types de diversité, de multiplier par N l'ordre de diversité initial afin d'augmenter la qualité de la liaison ou de permettre, à qualité égale, de réduire les performances des autres organes, tels que la puissance des émetteurs ou le gain des antennes afin d'optimiser le coût des équipements. Il est à noter que le système décrit est compatible avec la diversité en fréquence classique à condition de prévoir un écart de fréquence suffisant pour cette dernière.

Ce système de transmission en diversité de fréquence, est bien adapté aux liaisons par diffusion utilisant une seule antenne par terminal.

## Revendications

1. Système de transmission radioélectrique, entre deux stations terminales, de signaux à haute fréquence modulés par l'information numérique à transmettre dans lequel ces signaux sont transmis en diversité de fréquence d'ordre N, N étant un entier positif supérieur à 1, l'émetteur comportant, pour générer les N porteuses, un oscillateur (1) de fréquence f modulé en fréquence par un signal de fréquence F issu d'un générateur (2), caractérisé en ce que la transmission entre les stations terminales s'effectue par diffusion troposphérique ou ionosphérique, en ce que la modulation de fréquence de l'oscillateur est effectuée selon un indice déterminé de manière à obtenir, parmi les raies du spectre créées par cette modulation, N raies ayant quasiment la même amplitude; et en ce qu'il comporte en outre un dispositif de modulation de phase numérique (10) dont l'entrée de signal est couplée à la sortie de l'oscillateur (1) et dont l'entrée de modulation (4) reçoit des signaux d'information dont la fréquence la plus élevée est inférieure à F, et un amplificateur de puissance crête égale à 2P (7) couplé à la sortie du dispositif de modulation amplifiant simultanément les N raies à une puissance moyenne P/N, suivi d'un filtre passe bande de largeur de bande (8) légèrement supérieure à (N—1)F, et d'une antenne d'émission.

2. Système de transmission radioélectrique, entre deux stations terminales, de signaux à haute fréquence modulés par l'information numérique à transmettre, dans lequel ces signaux sont transmis en diversité de fréquence d'ordre N, N étant un entier positif supérieur à 1, caractérisé en ce que la transmission entre les stations terminales s'effectue par diffusion troposphérique ou ionosphérique et en ce que pour générer les N porteuses l'émetteur comprend: un oscillateur (1) de fréquence f modulé en fréquence, par un signal composite obtenu par sommation dans un sommateur (11) d'un signal de fréquence F issu d'un générateur (2) et de signaux d'information dont la fréquence la plus élevée est inférieure à F, l'indice de modulation de l'oscillateur (1) par le signal de sortie du générateur en l'absence de signaux d'information, étant déterminé de manière à obtenir, parmi les raies du spectre créé par cette modulation de fréquence, N raies ayant quasiment la même amplitude, le système comportant en outre un amplificateur de puissance crête égale à 2P (7) couplé à la sortie de l'oscillateur (1), amplifiant simultanément les N raies à une puissance moyenne P/N, suivi d'un filtre passe bande (8) de largeur de bande légèrement supérieure à (N—1)F, et d'une antenne d'émission.

3. Système de transmission selon l'une des revendications 1 et 2, caractérisé en ce que le récepteur comporte, en série, des étages d'entrée (32, 33, 35) et un amplificateur à fréquence intermédiaire (37) ayant une largeur de bande légèrement supérieure à (N—1)F; N circuits (39, 40, 41) filtrant, amplifiant et démodulant respectivement chacune des N raies; et un combineur de diversité (42) couplé aux sorties des N circuits.

4. Système de transmission selon la revendication 3, caractérisé en ce que l'indice est sensiblement égal à 1,435, N étant égal à 3.

5. Système de transmission selon la revendication 3, caractérisé en ce que l'indice est sensiblement égal à 1,8, N étant égal à 5.

**Patentansprüche**

1. Radioelektrisches Übertragungssystem zwischen zwei Endstationen für Hochfrequenzsignale, die durch die digitale zu übertragende Information moduliert sind, wobei diese Signale in Frequenz-Diversity der Ordnung N übertragen werden und N eine positive ganze Zahl größer als 1 ist, wobei der Sender zur Erzeugung der N Träger einen Oszillator (1) der Frequenz f besitzt, der durch ein von einem Generator (2) stammendes Signal der Frequenz F frequenzmoduliert ist, dadurch gekennzeichnet, daß die Übertragung zwischen den Endstationen über eine Diffusion an der Troposphäre oder der Ionosphäre erfolgt, daß die Frequenzmodulation des Oszillators gemäß einem bestimmten Index so erfolgt, daß man unter den durch diese Modulation erzeugten Spektrallinien N Linien erhält, die nahezu gleiche Amplitude besitzen, und daß das System außerdem eine digitale Phasenmodulationsvorrichtung (10), deren Signaleingang an den Ausgang des Oszillators (1) gekoppelt ist und deren Modulationseingang (4) die Informationssignale, deren höchste Frequenz kleiner als F ist, empfängt, und einen Verstärker (7) aufweist, dessen Spitzenleistung gleich 2P ist und der an den Ausgang der Modulationsvorrichtung gekoppelt ist, um zugleich die N Linien auf eine mittlere Leistung P/N zu verstärken, wobei dieser Verstärker von einem Bandpaßfilter (8) einer Bandbreite, die etwas größer als (N—1)F ist, und von einer Sendeantenne gefolgt ist.

2. Radioelektrisches Übertragungssystem zwischen zwei Endstationen für Hochfrequenzsignale, die durch die digitale zu übertragende Information moduliert sind, wobei diese Signale in Frequenz-Diversity der Ordnung N übertragen werden und N eine positive ganze Zahl größer als 1 ist, dadurch gekennzeichnet, daß die Übertragung zwischen den Endstationen über eine Diffusion an der Troposphäre oder der Ionosphäre erfolgt und daß der Sender zur Erzeugung der N Träger einen Oszillator (1) der Frequenz f besitzt, der durch ein zusammengesetztes Signal frequenzmoduliert ist, wobei dieses Signal in einem Summierer (11) aus einem von einem Generator (2) stammenden Signal der Frequenz F und aus Informationssignalen erstellt wird, deren höchste Frequenz kleiner als F ist, wobei der Modulationsindex des Oszillators (1) bezüglich des Ausgangssignals des Generators in Abwesenheit von Informationssignalen so bestimmt ist, daß man unter den durch diese Frequenzmodulation erzeugten Spektrallinien N Linien erhält, die etwa gleiche Amplitude besitzen, wobei das System weiter einen Verstärker (7) aufweist, dessen Spitzenleistung gleich 2P ist und der an den Ausgang des Oszillators (1) gekoppelt ist, um zugleich die N Linien auf eine mittlere Leistung P/N zu verstärken, wobei dieser Verstärker von einem Bandpaßfilter (8) einer Bandbreite, die etwas größer als (N—1)F ist, und von einer Sendeantenne gefolgt ist.

3. Übertragungssystem nach einem der Ansprüche 1 und 2, dadurch gekennzeichnet, daß der Empfänger in Reihe Eingangsstufen (32, 33, 35) und einen Zwischenfrequenzverstärker (37) mit einer geringfügig größeren Bandbreite als (N—1)F, N Filterkreise (39, 40, 41), die je eine der N Spektrallinien verstärken und demodulieren, und einen Diversity-Verknüpfungskreis (42) aufweist, der an die Ausgänge der N Kreise angeschlossen ist.

4. Übertragungssystem nach Anspruch 3, dadurch gekennzeichnet, daß der Index im wesentlichen gleich 1,435 ist, wobei N=3 ist.

5. Übertragungssystem nach Anspruch 3, dadurch gekennzeichnet, daß der Index im wesentlichen gleich 1,8 ist, wobei N=5 ist.

**Claims**

1. A radioelectric transmission system between two terminal stations for the transmission of high frequency signals which are modulated by the digital message information, these signals being transmitted according to a frequency diversity of the order N, N being a positive integer of at least 2, the emitter comprising, for the generation of the N carriers, an oscillator (1) creating the frequency f and being frequency-modulated by a signal, having the frequency F and being issued by a generator (2), characterized in that the transmission between the terminal stations is realized by tropospheric or ionospheric diffusion, that the frequency modulation of the oscillator is effected according to a predetermined index in order to obtain N spectrum lines of nearly identical amplitudes out of the set of spectrum lines created by that modulation, and that the system further comprises a digital phase modulation device (10) the signal input of which is coupled to the oscillator (1) output and the modulation input (4) of which receives information signals, the highest frequency of these signals being lower than F, and comprises an amplifier (7) having a peak power equal to 2P, being coupled to the output of the modulation device and amplifying simultaneously the N spectrum lines to a mean power of P/N, followed by a band pass filter (8) of a bandwidth slightly larger than (N—1)F, and by an emission antenna.

2. A radioelectric transmission system between two terminal stations for the transmission of high frequency signals which are modulated by the digital message information, these signals being transmitted according to a frequency diversity of the order N, N being a positive integer of at least 2, characterized in that the transmission between the terminal stations is realized by tropospheric or ionospheric diffusion, and that the emitter comprises for the generation of the N carriers an oscillator (1) creating the frequency f and being frequency-modulated by a composite signal obtained in a summing unit (11) by summing up a signal of the frequency F issued by a generator (2) and information signals, the highest frequency of which is below F, the modulation index of the oscillator (1) by the output signal of the generator, as long as no information signals are present, being determined in such a way that among the spectrum lines created by this frequency modulation, N lines having nearly identical amplitudes are obtained, the system further comprising an amplifier (7) having a peak power equal to 2P, being coupled to the oscillator (1) output and amplifying simultaneously the N spectrum lines to a mean power of P/N, followed by a band pass filter (8) of a bandwidth slightly larger than (N—1)F, and by an emission antenna.

3. A transmission system according to one of claims 1 and 2, characterized in that the receiver comprises in series input stages (32, 33, 35) and an intermediate frequency amplifier (37) having a bandwidth slightly larger than (N—1)F, N filtering circuits (39, 40, 41) each of which amplifies and demodulates one of the N lines, and a diversity combination unit (42) coupled to the output of the N circuits.

4. A transmission system according to claim 3, characterized in that the index is essentially equal to 1,435, N being equal to 3.

5. A transmission system according to claim 3, characterized in that the index is essentially equal to 1,8 N, N being equal to 5.

FIG. 1

FIG. 2

FIG. 3